# EUROPEAN PATENT SPECIFICATION

(11) **EP 4 377 954 B1**
(45) Date of publication and mention of the grant of the patent: **06.05.2026**
(21) Application number: 21951179.7
(22) Date of filing: 27.07.2021
(51) Int. Cl.: G10L 15/22, G10L 25/63, G10L 17/20

(54) **VOICE OR SPEECH RECOGNITION USING CONTEXTUAL INFORMATION AND USER EMOTION**
SPRACH- ODER SPRACHERKENNUNG UNTER VERWENDUNG KONTEXTUELLER INFORMATIONEN UND BENUTZEREMOTIONEN
RECONNAISSANCE DE LA VOIX OU DE LA PAROLE À L'AIDE D'INFORMATIONS CONTEXTUELLES ET DE L'ÉMOTION D'UN UTILISATEUR

(43) Date of publication of application: 05.06.2024
(73) Proprietor: QUALCOMM INCORPORATED, San Diego, California 92121-1714 (US)
(72) Inventor: WEI, Jun, San Diego, California 92121-1714 (US); DONG, Xiaoxia, San Diego, California 92121-1714 (US); PAN, Qimeng, San Diego, California 92121-1714 (US); JIN, Kwihyuk, San Diego, California 92121-1714 (US); TANG, Tong, San Diego, California 92121-1714 (US)
(74) Representative: Pritzlaff, Stefanie Lydia
(86) International application number: PCT/CN2021/108563
(87) International publication number: WO 2023/004561

(56) References cited:
- CN-A- 102 254 551
- CN-A- 105 556 920
- CN-A- 108 305 633
- CN-A- 112 735 437
- US-A1- 2003 182 123
- US-A1- 2013 304 478
- US-A1- 2018 293 988
- US-A1- 2020 175 993
- US-B2- 10 431 215

## Description

### BACKGROUND

Modern computing devices, including cell phones, laptops, tablets, and desktop computers, use speech and/or voice or speech recognition for various functions. Speech recognition extracts the words that are spoken whereas voice or speech recognition (referred to as speaker identification) identifies the voice that is speaking, rather than the words that are spoken. Thus, speech recognition determines "what someone said," while voice or speech recognition determines "who said it." Speech recognition is handy for providing verbal commands to computing devices, thus eliminating the need to touch or directly engage a keyboard or touch-screen. Voice or speech recognition provides a similar convenience, but may also be applied as an identification authentication tool. Also, identifying the speaker may improve speech recognition by using a more appropriate voice or speech recognition model that is customized for that speaker. While contemporary software/hardware has improved deciphering the subtle nuances of speech and voice or speech recognition, the accuracy of such systems is generally impacted by ambient noise and other elements such as the natural daily variations in a user's voice. Even systems that attempt to filter-out ambient noise have trouble accounting for the variations in ambient noise that occurs in different locations or types of location, or user voice variations that often occur.
Attention is drawn to US 10 431 215 B2 describing a system and method is provided for adjusting natural language conversations between a human user and a computer based on the human user's cognitive state and/or situational state, particularly when the user is operating a vehicle. The system may disengage in conversation with the user (e.g., the driver) or take other actions based on various situational and/or user states. For example, the system may disengage conversation when the system detects that the driving situation is complex (e.g., car merging onto a highway, turning right with multiple pedestrians trying to cross, etc.). The system may (in addition or instead) sense the user's cognitive load and disengage conversation based on the cognitive load.
The system may alter its personality (e.g. by engaging in mentally non-taxing conversations such as telling jokes based on situational and/or user states.
Attention is further drawn to US 2003/182123 A1 describing an emotion detecting method capable of detecting emotion of a human accurately, and provide sensibility generating method capable of outputting sensibility akin to that of a human. An intensity, a tempo, and intonation in each word of a voice are detected based on an inputted voice signal, amounts of change are obtained for the detected contents, respectively, and signals expressing each states of emotion of anger, sadness, and pleasure are generated based on the amounts of change. A partner's emotion or situation information is inputted, and thus instinctive motivation information is generated. Moreover, emotion information including basic emotion parameters of pleasure, anger, and sadness is generated, which is controlled based on the individuality information.
Attention is further drawn to US 2018/293988 A1 describing techniques related to speaker recognition. Such techniques include determining context aware confidence values formed of false accept and false reject rates determined by using adaptively updated acoustic environment score distributions matched to current score distributions.

### SUMMARY

The present invention is set forth in the independent claims 1, 5 and 12. Further embodiments of the invention are described in the dependent claims.

Various aspects include methods and computing devices implementing the methods of voice and/or speech recognition executed by a processor of a computing device. Various aspects include determining a voice or speech recognition threshold for voice or speech recognition based on information obtained from contextual information detected in an environment from which a received audio input was captured by the computing device and an emotional classification of a user's voice in the received audio input, determining a confidence score for one or more key words identified in the received audio input, and outputting results of a voice or speech recognition analysis of the received audio input in response to the determined confidence score exceeding the determined voice or speech recognition threshold.

Some aspects may include analyzing the received audio input to obtain the contextual information detected in the environment from which the received audio input was recorded by the computing device.

Some aspects may include analyzing the received audio input to determine the emotional classification of the user's voice in the received audio input.

Some aspects may include receiving an emotion classification model from a remote computing device, in which analyzing the received audio input to determine the emotional classification of the user's voice in the received audio input may include analyzing the received audio input using the received emotional classification model.

Some aspects may include determining a recognition level of the received audio input based on at least one of a detection rate or a false alarm rate of voice or speech recognition of words or phrases in the received audio input, in which determining the voice or speech recognition threshold may include determining the voice or speech recognition threshold based on the determined recognition level of the received audio input.

Some aspects may include extracting background noise from the received audio input, wherein determining the voice or speech recognition threshold for voice or speech recognition may include determining the voice or speech recognition threshold based on the extracted background noise.

Some aspects may include sending feedback to a remote computing device regarding whether the determined confidence score exceeded the determined voice or speech recognition threshold.

Some aspects may include receiving a threshold model update from a remote computing device, in which determining the voice or speech recognition threshold for voice or speech recognition uses the received threshold model update. Some aspects may further include sending feedback to the remote computing device regarding audio input received by the computing device in a format suitable for use by the remote computing device in generating the received threshold model update.

Further aspects include a computing device including a processor configured with processor-executable instructions to perform operations of any of the methods summarized above. Further aspects include a non-transitory processor-readable storage medium having stored thereon processor-executable software instructions configured to cause a processor to perform operations of any of the methods summarized above. Further aspects include a processing device for use in a computing device and configured to perform operations of any of the methods summarized above.

### BRIEF DESCRIPTION OF THE DRAWINGS

The accompanying drawings, which are incorporated herein and constitute part of this specification, illustrate exemplary embodiments, and together with the general description given above and the detailed description given below, serve to explain the features of the various embodiments.
FIGS. 1A and 1B are schematic diagrams illustrating example systems configured for voice and/or speech recognition executed by a processor of one or more computing devices.
FIG. 2 is a schematic diagram illustrating components of an example system in a package for use in a computing device in accordance with various embodiments.
FIGS. 3A, 3B, 3C, 3D, 3E, 3F, 3G, 3H, and/or 3I are process flow diagrams of example methods of voice or speech recognition that may be executed by a processor of a computing device according to various embodiments.
FIG. 4 is a component block diagram of a network server computing device suitable for use with various embodiments.
FIG. 5 is a component block diagram of a mobile computing device suitable for use with various embodiments.

### DETAILED DESCRIPTION

Various aspects will be described in detail with reference to the accompanying drawings. Wherever possible, the same reference numbers will be used throughout the drawings to refer to the same or like parts. References made to particular examples and embodiments are for illustrative purposes and are not intended to limit the scope of the various aspects or the claims.

Various embodiments provide methods of voice or speech recognition in varied environments and/or user emotional states executed by a processor of a computing device. Various embodiments may determine a voice or speech recognition threshold for voice or speech recognition based on information obtained from contextual information detected in an environment from which a received audio input was recorded by the computing device and an emotional classification of a user's voice in the received audio input. Voice and/or speech recognition may be performed on the received audio input in response to voice or speech recognition of the received audio input exceeding the determined voice or speech recognition threshold.

In voice or speech recognition, the sounds of the speaker's voice and particular keywords or phrases may be used to recognize and authenticate the speaker, much like a finger print sensor or a facial recognition process. In speech recognition, the sounds of the speaker's voice are transcribed into words (i.e., text) and/or commands that can be processed and stored by the computing device. For example, a user may speak a key phrased to enable voice or speech recognition and authentication of the user, after which the user may dictate to the computing device, which transcribes the user's words or translates them into automated functions using speech recognition methods.

Various embodiments may improve voice or speech recognition and/or speech recognition by using trained models that account for ambient sounds (i.e., background noise where the speaker is using the computing device) and emotional characteristics of the user's voice, which may change with the user's mood. For example, a first voice or speech recognition model may be used for voice and/or speech recognition of utterances by a speaker in a first environment (e.g., in a quiet office), while a second voice or speech recognition model may be used for voice and/or speech recognition of utterances from that same speaker in a second environment that is typically noisier than the first environment or generally has a different level or type of ambient background noise (e.g., at home with family). As another example, a first voice or speech recognition model may be used for voice and/or speech recognition of utterances by a speaker whose voice expresses a first emotional type (e.g., calm and/or speaking in a "normal" tone and tempo), while a second voice or speech recognition model may be used for voice and\ special characteristics of the background noise (e.g., library or other quiet place, restaurant, automobile, city street, etc.) and/or the speaker's voice (e.g., calm, happy, angry, fearful, sad, tired, etc.).

Voice and/or speech recognition may be done using mathematical modeling. In this way, a quantified set of values and/or a mathematical description is developed and configured to be used, under a specified set of circumstances, for computer-based predictive analysis of an audio signal for automatic voice and/or speech recognition, which includes translation of spoken language into text or commands, and/or the identification of the speaker. Various embodiments use models for voice and/or speech recognition that account for not only various types of background noise, but also emotional characteristics from the way a particular user is speaking. By using an appropriate model that is suited for the condition in which speech is vocalized, voice and/or speech recognition may be accomplished more accurately.

Various embodiments may use a voice or speech recognition threshold in order to ensure identified words or phrases are accurately identified. As used herein, the term "voice or speech recognition threshold" refers to a designated minimum confidence score an identified word or phrase must achieve to be it is considered recognizable. A voice and/or speech recognition system may analyze audio inputs for key words and give those audio inputs a confidence score. The confidence score reflects a level of assurance that an identified key word or phrase is accurately understood. The confidence score may be derived by how closely the analyzed audio input matches saved audio profiles of a key word or phrase. An identified key word or phrase with a confidence score that does not exceed the voice or speech recognition threshold may be rejected and thus considered an unrecognized utterance.

As used herein, the term "computing device" refers to an electronic device equipped with at least a processor, communication systems, and memory configured with a contact database. For example, computing devices may include any one or all of cellular telephones, smartphones, portable computing devices, personal or mobile multi-media players, laptop computers, tablet computers, 2-in-1 laptop/table computers, smartbooks, ultrabooks, palmtop computers, wireless electronic mail receivers, multimedia Internet-enabled cellular telephones, wearable devices including smart watches, entertainment devices (e.g., wireless gaming controllers, music and video players, satellite radios, etc.), and similar electronic devices that include a memory, wireless communication components and a programmable processor. In various embodiments, computing devices may be configured with memory and/or storage. Additionally, computing devices referred to in various example embodiments may be coupled to or include wired or wireless communication capabilities implementing various embodiments, such as network transceiver(s) and antenna(s) configured to communicate with wireless communication networks.

The term "system on chip" (SOC) is used herein to refer to a single integrated circuit (IC) chip that contains multiple resources and/or processors integrated on a single substrate. A single SOC may contain circuitry for digital, analog, mixed-signal, and radio-frequency functions. A single SOC may also include any number of general purpose and/or specialized processors (digital signal processors, modem processors, video processors, etc.), memory blocks (e.g., ROM, RAM, Flash, etc.), and resources (e.g., timers, voltage regulators, oscillators, etc.). SOCs may also include software for controlling the integrated resources and processors, as well as for controlling peripheral devices.

The term "system in a package" (SIP) may be used herein to refer to a single module or package that contains multiple resources, computational units, cores and/or processors on two or more IC chips, substrates, or SOCs. For example, a SIP may include a single substrate on which multiple IC chips or semiconductor dies are stacked in a vertical configuration. Similarly, the SIP may include one or more multichip modules (MCMs) on which multiple ICs or semiconductor dies are packaged into a unifying substrate. A SIP may also include multiple independent SOCs coupled together via high-speed communication circuitry and packaged in close proximity, such as on a single motherboard or in a single wireless device. The proximity of the SOCs facilitates high speed communications and the sharing of memory and resources.

As used herein, the terms "component," "system," "unit," "module," and the like include a computer-related entity, such as, but not limited to, hardware, firmware, a combination of hardware and software, software, or software in execution, which are configured to perform particular operations or functions. For example, a component may be, but is not limited to, a process running on a processor, a processor, an object, an executable, a thread of execution, a program, and/or a computer. By way of illustration, both an application running on a communication device and the communication device may be referred to as a component. One or more components may reside within a process and/or thread of execution and a component may be localized on one processor or core and/or distributed between two or more processors or cores. In addition, these components may execute from various non-transitory computer readable media having various instructions and/or data structures stored thereon. Components may communicate by way of local and/or remote processes, function or procedure calls, electronic signals, data packets, memory read/writes, and other known computer, processor, and/or process related communication methodologies.

Voice and speech recognition systems according to various embodiments may employ deep learning techniques and draw from big data (i.e., large collective data sets) to generate voice or speech recognition models that will accurately translate speech to text, provide speech activation functions, and/or determine or confirm the identity of the speaker (i.e., authentication) in the presence of different types of background noises or moods of the speaker. By using customized voice or speech recognition models tailored for specific contexts of speech or emotional states, systems employing various embodiments may provide improved voice and/or speech recognition performance by reducing the impact on accuracy or recognition that environmental noise or variations in human speech can have on voice and/or speech recognition systems.

In various embodiments, a processor of a computing device may determine a recognition level to use for voice or speech recognition performed on a received audio input. The determined recognition level may correlate to a level of detection rate (DR) and/or false alarm rate (FAR) selected to be used for voice and/or speech recognition. Generally speaking, there is a trade-off between DR and FAR. In particular, using a high DR, which is more likely to detect words or phrases in a voice or speech recognition system, will correlate to a high FAR because more words or phrases are likely to be erroneously detected. Also, using a low DR for words or phrases in a voice or speech recognition system will correlate to a low FAR because fewer words or phrases are likely to be erroneously detected. Thus, as used herein a "recognition level" may correlate generally to a level of the DR and/or the FAR. For example, the recognition level may be a low, medium, or high level, which corresponds to a low, medium, or high level of the DR or the FAR.

In accordance with various embodiments, the determination of what recognition level will be used for voice and/or speech recognition may be based on a combination of a detected environment type (e.g., based on ambient background noise) and a determined emotion type (e.g., based on emotional signals detected in a user's voice. A lookup table or database may be used to determine a recognition level that is associated with a particular detected emotion type and environment noise type. In addition, various embodiments may determine an appropriate voice or speech recognition threshold for voice or speech recognition based on the determined recognition level. The determined voice or speech recognition threshold may also be based on information obtained from contextual information detected in an environment from which a received audio input was recorded by the computing device and an emotional classification of a user's voice in the received audio input. Further, determining the voice or speech recognition threshold may also take into account noise extracted from the received audio input.

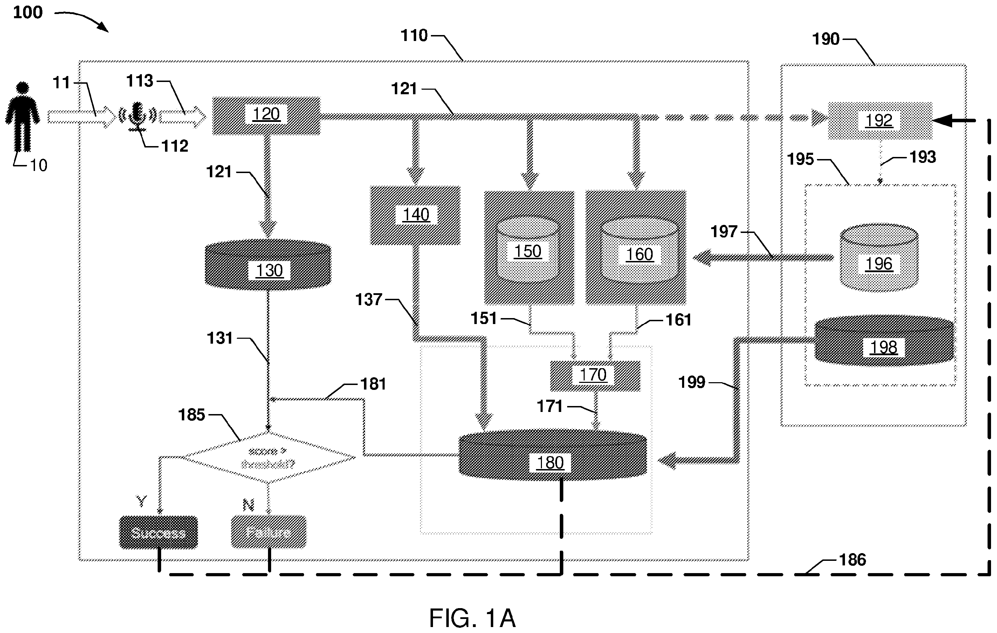

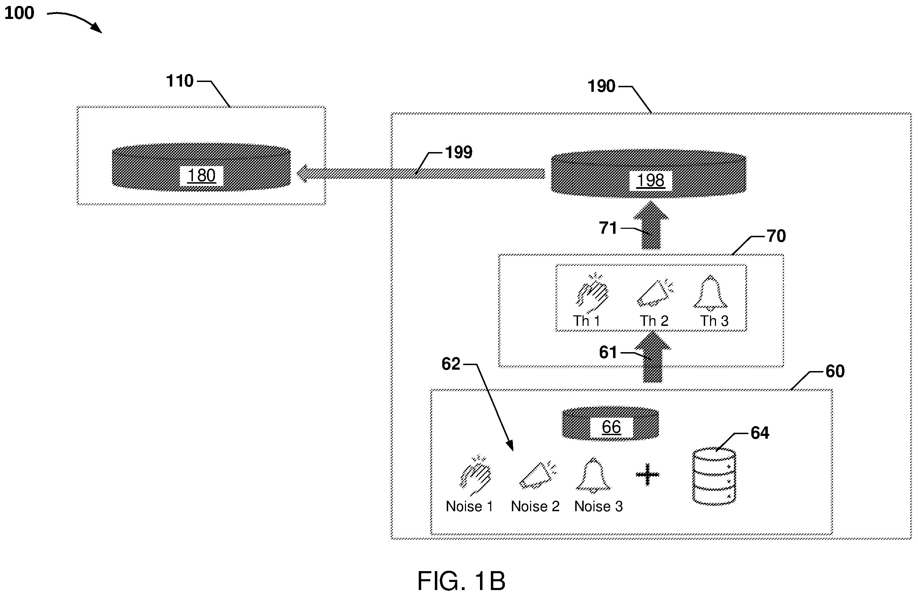

FIGS. 1A and 1B illustrate an environment 100 with user equipment 110, 190 configured to provide voice and/or speech recognition functions in accordance with various embodiments. In particular, FIGS. 1A-1B illustrate user equipment 110, which may be configured to perform voice or speech recognition on audio inputs. In addition, the remote computing device 190 may be configured to maintain and develop voice or speech recognition models, which may be downloaded to the user equipment 110 for updating and improving voice and/or speech recognition functions. In particular, the remote computing device 190 may be configured to maintain and develop voice or speech recognition threshold determination and/or emotion determination models, which may be downloaded to the user equipment 110. The user equipment 110 may represent almost any mobile computing device, configured to perform wireless communications, such as to communicate with others and/or remote computing device(s) 190.

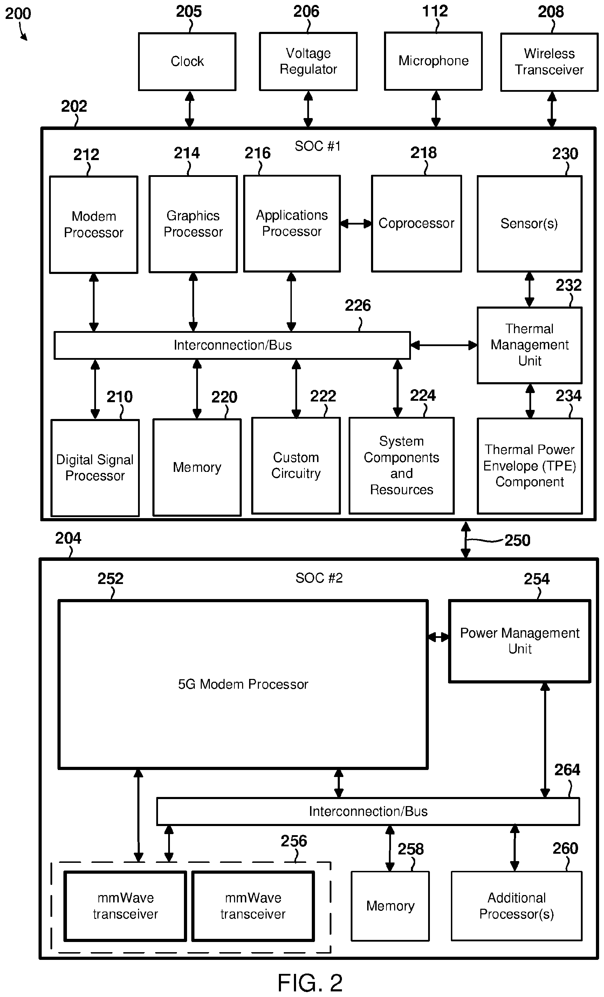

In FIG. 1A, a user 10 is illustrating talking into the user equipment 110. The user equipment 110 may include one or more microphone(s) 112 configured to receive audio inputs 11, which may include user utterances and/or background noise. The microphone(s) 112 may convert the received audio inputs 11 to an electrical signal 113 (i.e., digitized into data packets for analysis and/or transmission) that may be transmitted to audio hardware 120. The audio hardware 120 may convert the received electrical signal 113 using pulse code modulation (PCM) and transmit the converted audio input 121 to one or more analysis modules 130, 140, 150, 160. In particular, the audio hardware 120 may transmit the converted audio input 121 to a keyword detection module 130, a noise extraction module 140, an audio context detection module 150, and a user emotion detection module 160. In addition, or alternatively, the audio hardware 120 may transmit the converted audio input 121 to the remote computing device(s) 190, such as via a transceiver (e.g., 208 in FIG. 2) and a communication network.

The user equipment 110 may be configured by machine-readable instructions, which may include one or more instruction modules. The instruction modules may include computer program modules. In particular, the instruction modules may include one or more of the keyword detection module 130, the noise extraction module 140, the audio context detection module 150, and the user emotion detection module 160, as well as a recognition level module 170, a voice and speech recognition threshold determination module 180, a keyword score assessment module 185 and/or other instruction modules.

The keyword detection module 130 may analyze the converted audio input 121 to identify key words or phrases from a user utterance in the received audio input 11. In addition, the keyword detection module 130 may determine a confidence score 131 for one or more key words identified in the received audio input 11. The determined confidence score 131 may be forwarded to a keyword score assessment module 185, which may ensure the identified key word or phrase satisfies a determined voice or speech recognition threshold.

The noise extraction module 140 may extract background noise from the converted audio input 121, which represents background noise in received audio inputs 11. The extracted background noise may reflect ambient noise in the environment of the user equipment 110. The noise extraction module 140 may then forward a PCM background noise file 137 to a voice and speech recognition threshold determination module 180.

The audio context detection module 150 may analyze the converted audio input 121 to detect contextual information in an environment from which the received audio input 11 was recorded by the user equipment 110. The audio context detection module 150 may use a preprogrammed audio context detection model to analyze the converted audio input 121. Based on the detected contextual information, the audio context detection module 150 may determine a category or type of environment in which the received audio input 11 was generated. For example, the type of environment may include quiet, music, chatter (i.e., one or more other voices), machinery, vehicle cabin (e.g., car, plane, train), office, home, etc. The audio context detection module 150 may then forward the determined environment type 151 to a recognition level module 170.

The user emotion detection module 160 may analyze the converted audio input 121 to determine an emotion type 161 of the user's speech in the received audio input. The emotion type 161 of the user's speech may reflect what type of emotion is detected in the user's speech, since voice and/or speech recognition may be more reliably performed on speech uttered with some types of emotion over others. A user's voice may vary for various reasons, but particularly due to an emotional state of the user. For example, in the morning a user may sound more tired or hoarse, which may make it more difficult to accurately perform voice and/or speech recognition on that user's speech.

Similarly, the user may be sick, have injuries, be in a rush, be angry, be happy, etc., which may make it harder or easier to accurately perform voice and/or speech recognition on that user's speech. When a user's voice is detected to be calm, it may be more appropriate to apply a voice or speech recognition threshold that is associated with a medium level of DR/FAR, which may also be used for most typical cases. When a user's voice is detected to be a bit angry, it may be more appropriate to apply a voice or speech recognition threshold that is associated with a high level of DR/FAR. When a user's voice is detected to be speaking in the midst of other conversations (background chatter), it may be more appropriate to apply a voice or speech recognition threshold that is associated with a low level of DR/FAR.

Situations in which voice or speech recognition is more difficult to accurately perform, may result in many utterances being unrecognizable if the voice or speech recognition threshold is too high. Thus, determining the user's emotional state may make voice or speech recognition difficult, a processor of the user equipment 110 may lower the voice or speech recognition threshold so more words or phrases are recognized. In this way, various embodiments may consider the type of emotion in the user's speech to help with voice and/or speech recognition. The user emotion detection module 160 may then forward the determined emotion type 161 to the recognition level module 170.

The recognition level module 170 may use the determined environment type 151 and the determined emotion type 161, received from the audio context detection module 150 and the user emotion detection module 160 respectively, to determine a recognition level 171 of the received audio input. For example, the recognition level module 170 may use a lookup table or database to determine a recognition level that is associated with a particular detected emotion type and environment noise type.

In addition, the determined recognition level 171 may be associated with a level of at least one of DR or FAR. For example, a high, medium, or low level of the determined recognition level 171 may be associated with a high, medium, or low level of DR and/or FAR, respectively. Alternatively, a fewer or greater number of levels may be used for the recognition level 171. For example, the recognition level may be based on a point scale or other scalar measurement.

Table 1, below, illustrates and example lookup table that may be used to determine a recognition level that is associated with a particular detected emotion type and environment noise type.

**Table 1**

| No. | Emotion Types | Audio Context Type |
|---|---|---|
| 1 | Normal (Calm) | Normal (Silence) |
| 2 | Joy (Happy) | Music |
| 3 | Anger/Fear | Chatter |
| 4 | Sadness | Outside |
| 5 | Tired | Car |
| 6 | .. | Office |
| 7 | | Speech (TV/Talk) |

In various embodiments, the voice and speech recognition threshold determination module 180 may determine a voice or speech recognition threshold 181 for use in voice and/or speech recognition. The determined voice or speech recognition threshold 181 may be determined based on the recognition level 171 and the PCM background noise file 137.

Determining what voice or speech recognition threshold 181 to apply may be accomplished using a trained neural network. A previously trained neural network may have an established understanding of a balance reached between DR and FAR (e.g., using one or more cost functions). In this way, if a keyword is uttered and detected when rock music is played, then the determined environment type 151 may be "Music," in which case the voice and speech recognition threshold might be reduced. In contrast, if a keyword is uttered when classic music is played, then determined environment type 151 may still be "Music," but the voice and speech recognition threshold might be increased. As a further example, if the user's voice is calm, then threshold model may provide threshold to have balance DR/FAR like normal level in above. If user's voice is bit anger, then threshold model may provide the threshold to have high DR like high level. If user is in an environment where may people speaking, then threshold model may provide the threshold to have low FAR.

The keyword score assessment module 185 may determine whether a confidence score of a keyword or phrase (i.e., determined by the keyword detection module) exceeds the voice or speech recognition threshold. In addition, the keyword score assessment module 185 may transmit feedback results 186 of the success or failure of the confidence score of one or more keywords or phrases exceeded the voice or speech recognition threshold.

The feedback results 186 may be transmitted to the remote computing device(s) 190, such as via a transceiver (e.g., 208 in FIG. 2) and a communication network. The transmitted feedback results 186 may include success and/or failure rates when using particular voice or speech recognition thresholds. Such feedback results 186 may be transmitted in a format suitable for use by the remote computing device for developing and/or adjusting the voice or speech recognition threshold used by the user equipment 110 or shared by the remote computing device 190. Alternatively, or additionally, the transmitted feedback results 186 may include the PCM background noise file 137, the determined environment type 151, the determined emotion type 161, the determined recognition level 171, and/or the determined voice or speech recognition threshold 181 uses in particular cases.

The transmitted feedback results 186 may also include additional information, such as what environment type was detected and/or what emotional state was detected. In addition, the transmitted feedback results 186 may be transmitted on a limited basis, such as only for training the system to minimize bandwidth consumption. Alternatively, feedback results 186 may be transmitted on a schedule (weekly/monthly) or some other interval. As a further alternative, feedback results 186 may be transmitted after a predetermined number of failures (e.g., 10 failures).

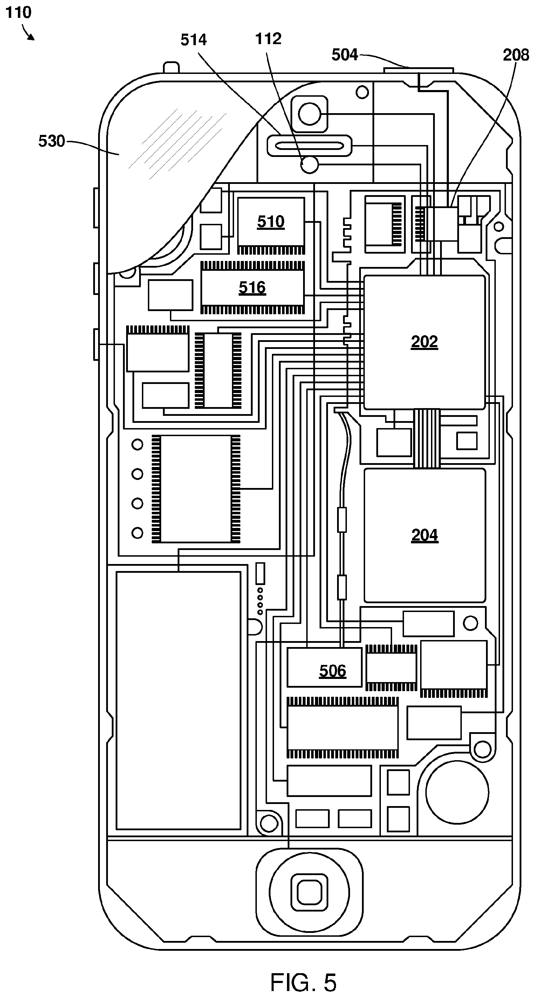

The user equipment 110 may be communicatively coupled to peripheral device(s) (not shown) and configured to communicate with the remote computing device(s) 190 and/or other external resources (not shown) using a wireless transceiver (e.g., 208 in FIGS. 2 and 5) and a communication network, such as a cellular communication network. The user equipment 110 may access the communication network via one or more base stations, which in-turn may be communicatively coupled to the remote computing device(s) 190 through wired and/or wireless connections. Similarly, the remote computing device(s) 190 may be configured to communicate with the user equipment 110 and/or the external resources using a wireless transceiver 208 and the communication network.

As described in more detail with reference to FIGS. 2 and 5, the user equipment 110 may include a plurality of hardware, software, and/or firmware components operating together to provide the functionality attributed herein to the user equipment 110. For example, the user equipment 110 may include one or more processors configured to execute computer program modules similar to those in the machine-readable instructions of the remote computing device(s) 190 described above. By way of non-limiting examples, the user equipment may include one or more of a laptop computer, a handheld computer, a tablet computing platform, a NetBook, a smartphone, a gaming console, and/or other mobile computing platforms.

The remote computing device(s) 190 may be part of a cloud-based computing network configured to help the user equipment 110, and others like it, improve voice and/or speech recognition. In particular, the remote computing device(s) 190 may compile and provide to the user equipment 110 different voice or speech recognition models and/or thresholds, which the user equipment 110 may use for voice and/or speech recognition. For example, the remote computing device(s) 190 may compile and provide, to the user equipment 110, one or more emotion classification models, which the user equipment 110 may use to analyze and classify utterances (i.e., emotional classifications) detected in received audio inputs. As a further example, the remote computing device(s) 190 may compile and provide, to the user equipment 110, one or more voice or speech recognition threshold models, which the user equipment 110 may use to determine a voice or speech recognition threshold to use for voice or speech recognition. The remote computing device(s) 190 may additionally receive, from the user equipment 110, feedback regarding the voice or speech recognition thresholds used by the user equipment 110.

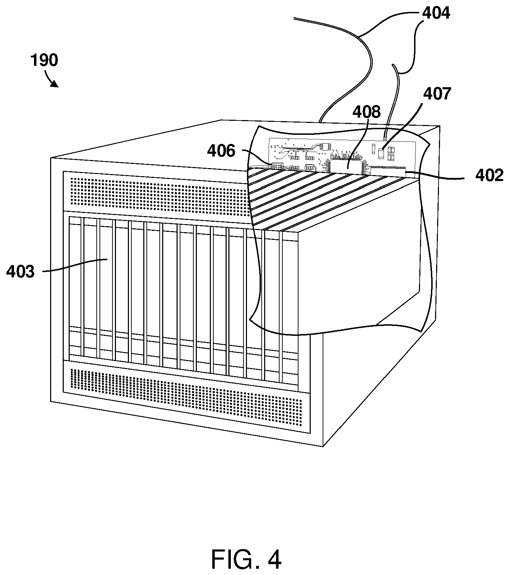

As described in more detail with reference to FIG. 4, a remote computing device 190 may include one or more processors configured to execute computer program modules similar to those in the machine-readable instructions of the user equipment 110. By way of non-limiting examples, remote computing devices may include one or more of a server, desktop computer, a laptop computer, a handheld computer, a tablet computing platform, a NetBook, a smartphone, a gaming console, and/or other computing platforms.

The remote computing device(s) 190 may include a user database 192, which may store the converted audio input 121 received from the user equipment 110. The converted audio input 121 may be used to train voice or speech recognition models the user equipment 110 and other computing devices. The remote computing device(s) 190 may be configured by machine-readable instructions, which may include one or more instruction modules. The instruction modules may include computer program modules. In particular, the instruction modules may include one or more of a training module 195, an emotion classification module 196, a voice and speech recognition threshold compilation module 198, and/or other instruction modules. The user database 192 may forward training information 193 to the training module 195 of the remote computing device 190. In addition, the training module 195 may include the emotion classification module 196 and the voice and speech recognition threshold compilation module 198.

The emotion classification module 196 may be trained using the converted audio input 121 and one or more training techniques (e.g., supervised learning, neural network, etc.). The emotion classification module 196 may transmit one or more emotion classification models 197, to the user equipment 110, and particularly the user emotion detection module 160.

The voice and speech recognition threshold compilation module 198 may use the converted audio input 121 and a collection of background noise profiles associated with different environment types (e.g., 151) to determine what voice and speech recognition threshold works best for each type of environment. Multiple voice and speech recognition thresholds may be maintained and used by the voice and speech recognition threshold compilation module 198. In this way, different voice and speech recognition thresholds may be trained for different combinations of environment types 151 and emotion types 161. The collection of background noise profiles may be compiled through crowd-sourcing or other collection techniques. The voice and speech recognition threshold compilation module 198 may transmit one or more threshold model updates 199, to the user equipment 110, and particularly the voice and speech recognition threshold determination module 180.

The remote computing device(s) 190 may also include electronic storage (e.g., 502, 503 in FIG. 5), one or more processors (e.g., 202, 204, 606 in FIGS. 2 and 5), and/or other components. The remote computing device(s) 190 may include communication lines, or ports to enable the exchange of information with a network, other computing platforms, and many user mobile computing devices, such as the user equipment 110. Illustration of the remote computing device(s) 190 is not intended to be limiting. The remote computing device(s) 190 may include a plurality of hardware, software, and/or firmware components operating together to provide the functionality attributed herein to the remote computing device(s) 190.

External resources of the user equipment 110 and/or the remote computing device(s) 190 may include remote servers that may receive sound recordings and generate voice or speech recognition models for various locations and categories of locations, as well as provide voice or speech recognition models to computing devices, such as in downloads via a communication network. External resources may receive sound recordings and information from voice and/or speech recognition processing performed in various locations from a plurality of user equipments and computing devices through crowd sourcing processes.

Electronic storage (e.g., 220, 258 in FIG. 2) may include non-transitory storage media that electronically stores information. The electronic storage media of electronic storage may include one or both of system storage that is provided integrally (i.e., substantially non-removable) with the user equipment 110 or remote computing device(s) 190, respectively, and/or removable storage that is removably connectable thereto. For example, a port (e.g., a Universal Serial Bus (USB) port, a FireWire port, etc.) or a drive (e.g., a disk drive, etc.). The electronic storage may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storage may include one or more virtual storage resources (e.g., cloud storage, a virtual private network, and/or other virtual storage resources). Also, the electronic storage may store software algorithms, information determined by processor(s), information received from the user equipment 110 or remote computing device(s) 190, respectively, that enables the user equipment 110 or remote computing device(s) 190, respectively to function as described herein.

Processor(s) (e.g., 210, 212, 214, 216, 218, 252, 260 in FIG. 2) may be configured to provide information processing capabilities in the user equipment 110 or remote computing device(s) 190, respectively. As such, the processor(s) may include one or more of a digital processor, an analog processor, a digital circuit designed to process information, an analog circuit designed to process information, a state machine, and/or other mechanisms for electronically processing information. Although processor(s) are shown in FIG. 2 as a single entity, this is for illustrative purposes only. In some implementations, processor(s) may include a plurality of processing units. These processing units may be physically located within the same device, or processor(s) may represent processing functionality of a plurality of devices, remote and/or local to one another, operating in coordination.

FIG. 1B shows the environment 100 with the remote computing device 190 compiling and transmitting a threshold model update 199 to the user equipment 110. With reference to FIGS. 1A-1B, the remote computing device 190 may use a tuning module 60, a training module 70, and a keyword compilation module 66 to determine one or more threshold model updates 199, which may be stored in the voice and speech recognition threshold compilation module 198 before transmission to the user equipment 110.

The tuning module 60 may include information provided by manufacturers or distributors of mobile computing devices, which information is designed to improve the threshold model updates (e.g., 199 in FIG. 1A) and/or the emotion classification models (e.g., 197 in FIG. 1A). For example, the tuning module 60 may include a database of background noise profiles 62 (e.g., Noise 1, Noise 2, Noise 3). The background noise profiles 62 may include audio profiles like background sounds that include quiet (i.e., a lack of significant background noise), music, chatter (i.e., one or more other voices), machinery, vehicle cabin noise (e.g., car, plane, train), office, home, etc. In addition, the tuning module 60 may include a database of keywords, phrases, and utterances 64. The keyword, phrase, and utterances 64 may be used by mobile computing devices (e.g., the user equipment 110) to analyze and/or search through large volumes of received audio inputs to isolate mentions or use of the noted keywords, phrases, or other utterances. Further, the tuning module 60 may include a keyword compilation module 66, which may store suggested keyword models for identifying keywords or phrases in an audio input. Together, the background noise profiles 62, the keywords, phrases, and utterances 64, and the keyword models of the keyword compilation module 66 may be passed along to the training module 70 as a threshold training model 61.

The training module 70 may be used to determine optimal voice or speech recognition thresholds 71 (e.g., Th 1, Th 2, Th 3) that may be used by the user equipment 110 under specified conditions. The specified conditions may associate particular voice or speech recognition thresholds that should be used in association with types of background noise. The determined optimal voice or speech recognition thresholds 71 (e.g., Th 1, Th 2, Th 3) may be passed along to the voice and speech recognition threshold compilation module 198 before transmission to the user equipment 110. The

The voice and speech recognition threshold compilation module 198 may use a neural network to determine and/or predict a best voice or speech recognition threshold to use under different conditions. Determined information about the best voice or speech recognition threshold to use under different conditions may be transmitted as a threshold model update 199 to the user equipment; particularly the voice and speech recognition threshold determination module 180.

The processor(s) may be configured to execute modules 60, 66, 70, 130, 140, 150, 160, 170, 180, 185, 192, 196, and/or 198, and/or other modules. Processor(s) 202, 204, 408, 506, may be configured to execute modules 60, 66, 70, 130, 140, 150, 160, 170, 180, 185, 192, 196, and/or 198, and/or other modules by software; hardware; firmware; some combination of software, hardware, and/or firmware; and/or other mechanisms for configuring processing capabilities on processor(s). As used herein, the term "module" may refer to any component or set of components that perform the functionality attributed to the module. This may include one or more physical processors during execution of processor readable instructions, the processor readable instructions, circuitry, hardware, storage media, or any other components.

The description of the functionality provided by the different modules 60, 66, 70, 130, 140, 150, 160, 170, 180, 185, 192, 196, and/or 198 described below is for illustrative purposes, and is not intended to be limiting, as any of modules 60, 66, 70, 130, 140, 150, 160, 170, 180, 185, 192, 196, and/or 198 may provide more or less functionality than is described. For example, one or more of modules 60, 66, 70, 130, 140, 150, 160, 170, 180, 185, 192, 196, and/or 198 may be eliminated, and some or all of its functionality may be provided by other ones of modules 60, 66, 70, 130, 140, 150, 160, 170, 180, 185, 192, 196, and/or 198. As another example, processor(s) 330 may be configured to execute one or more additional modules that may perform some or all of the functionality attributed below to one of modules 60, 66, 70, 130, 140, 150, 160, 170, 180, 185, 192, 196, and/or 198.

With reference to FIGS. 1A-2, the illustrated example SIP 200 includes a two SOCs 202, 204, a clock 205, a voltage regulator 206, a microphone 112, and a wireless transceiver 208. In some embodiments, the first SOC 202 operates as central processing unit (CPU) of the wireless device that carries out the instructions of software application programs by performing the arithmetic, logical, control and input/output (I/O) operations specified by the instructions. In some embodiments, the second SOC 204 may operate as a specialized processing unit. For example, the second SOC 204 may operate as a specialized 5G processing unit responsible for managing high volume, high speed (e.g., 5 Gbps, etc.), and/or very high frequency short wavelength (e.g., 28 GHz mmWave spectrum, etc.) communications.

The first SOC 202 may include a digital signal processor (DSP) 210, a modem processor 212, a graphics processor 214, an application processor 216, one or more coprocessors 218 (e.g., vector co-processor) connected to one or more of the processors, memory 220, custom circuitry 222, system components and resources 224, an interconnection/bus module 226, one or more temperature sensors 230, a thermal management unit 232, and a thermal power envelope (TPE) component 234. The second SOC 204 may include a 5G modem processor 252, a power management unit 254, an interconnection/bus module 264, a plurality of mmWave transceivers 256, memory 258, and various additional processors 260, such as an applications processor, packet processor, etc.

Each processor 210, 212, 214, 216, 218, 252, 260 may include one or more cores, and each processor/core may perform operations independent of the other processors/cores. For example, the first SOC 202 may include a processor that executes a first type of operating system (e.g., FreeBSD, LINUX, OS X, etc.) and a processor that executes a second type of operating system (e.g., MICROSOFT WINDOWS 10). In addition, any or all of the processors 210, 212, 214, 216, 218, 252, 260 may be included as part of a processor cluster architecture (e.g., a synchronous processor cluster architecture, an asynchronous or heterogeneous processor cluster architecture, etc.).

The first and second SOC 202, 204 may include various system components, resources and custom circuitry for managing sensor data, analog-to-digital conversions, wireless data transmissions, and for performing other specialized operations, such as decoding data packets and processing encoded audio and video signals for rendering in a web browser. For example, the system components and resources 224 of the first SOC 202 may include power amplifiers, voltage regulators, oscillators, phase-locked loops, peripheral bridges, data controllers, memory controllers, system controllers, access ports, timers, and other similar components used to support the processors and software clients running on a wireless device. The system components and resources 224 and/or custom circuitry 222 may also include circuitry to interface with peripheral devices, such as cameras, electronic displays, wireless communication devices, external memory chips, etc.

The first and second SOC 202, 204 may communicate via interconnection/bus module 250. The various processors 210, 212, 214, 216, 218, may be interconnected to one or more memory elements 220, system components and resources 224, and custom circuitry 222, and a thermal management unit 232 via an interconnection/bus module 226. Similarly, the processor 252 may be interconnected to the power management unit 254, the mmWave transceivers 256, memory 258, and various additional processors 260 via the interconnection/bus module 264. The interconnection/bus module 226, 250, 264 may include an array of reconfigurable logic gates and/or implement a bus architecture (e.g., CoreConnect, AMBA, etc.). Communications may be provided by advanced interconnects, such as high-performance networks-on chip (NoCs).

The first and/or second SOCs 202, 204 may further include an input/output module (not illustrated) for communicating with resources external to the SOC, such as a clock 205 and a voltage regulator 206. Resources external to the SOC (e.g., clock 205, voltage regulator 206) may be shared by two or more of the internal SOC processors/cores.

In addition to the example SIP 200 discussed above, various embodiments may be implemented in a wide variety of computing systems, which may include a single processor, multiple processors, multicore processors, or any combination thereof.

Various embodiments may be implemented using a number of single processor and multiprocessor computer systems, including a system-on-chip (SOC) or system in a package (SIP). FIG. 2 illustrates an example computing system or SIP 200 architecture that may be used in user equipment (e.g., 110), remote computing devices (e.g., 190), or other systems for implementing the various embodiments.

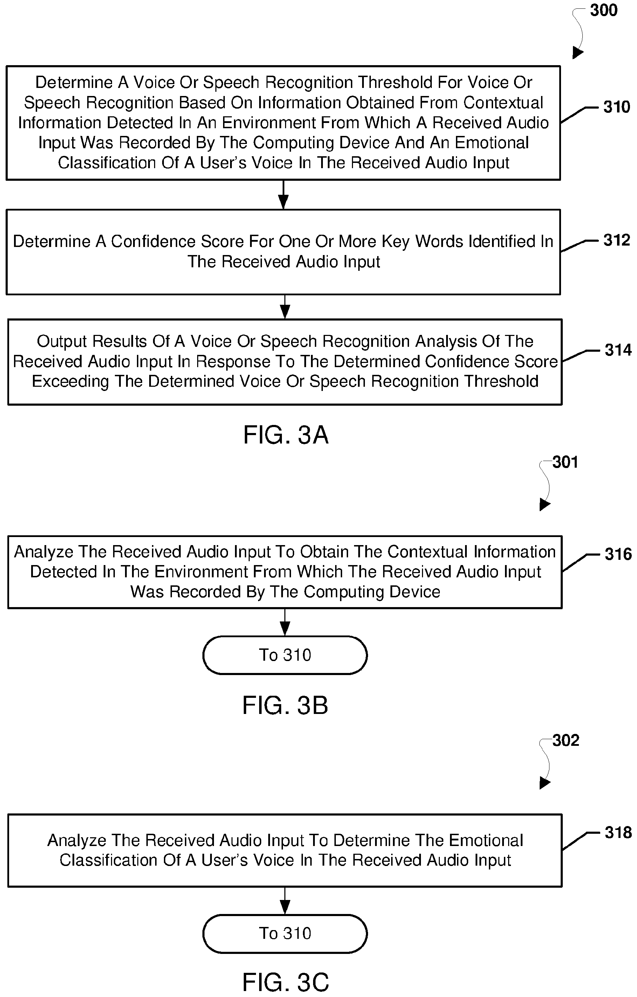

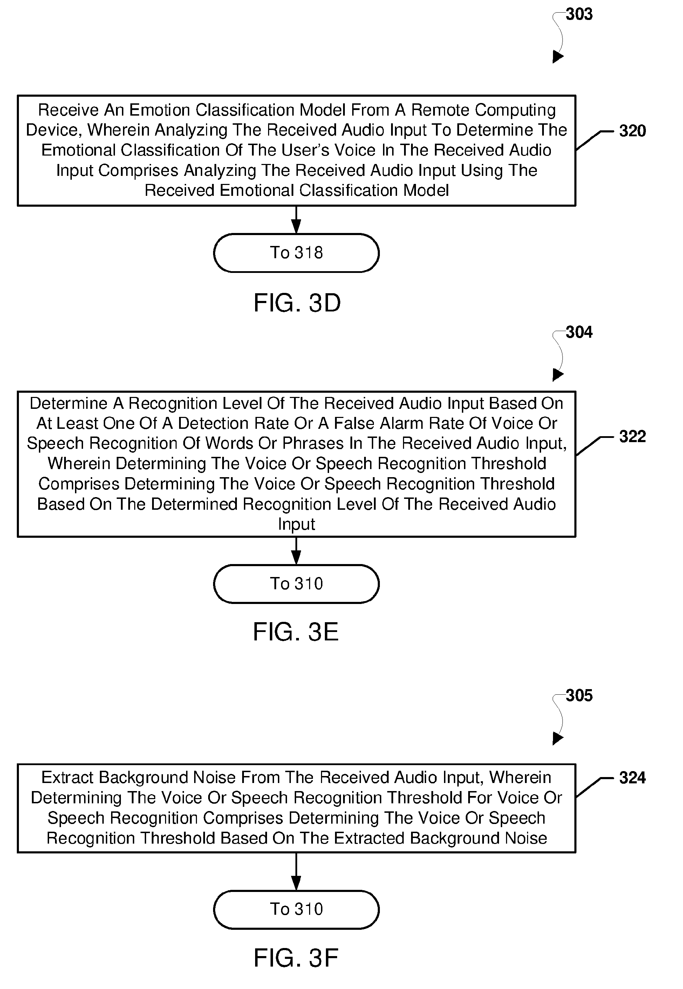

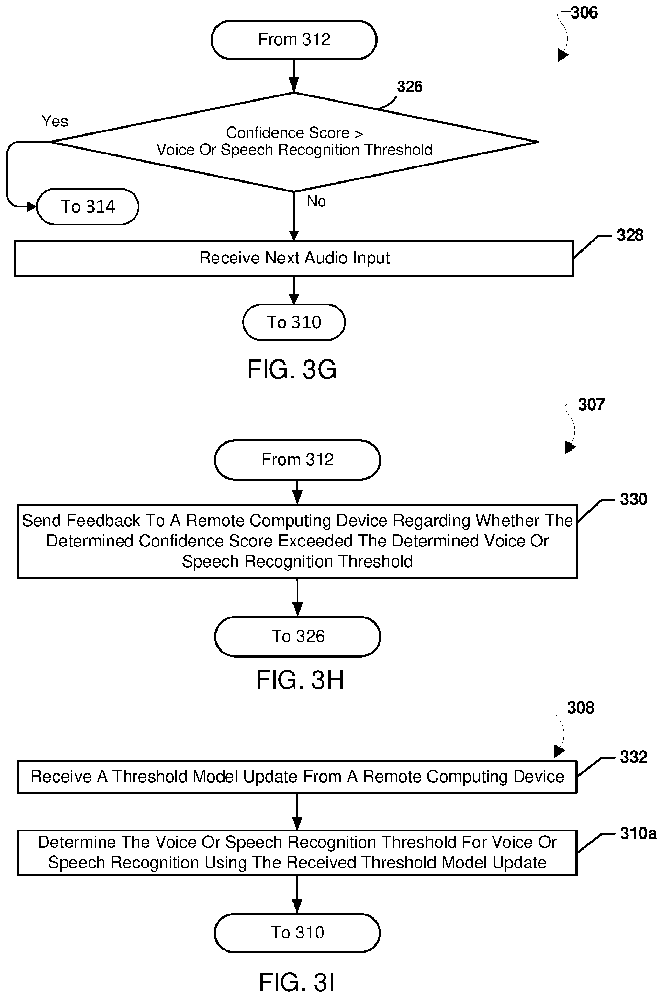

FIGS. 3A, 3B, 3C, 3D, 3E, 3F, 3G, 3H, and/or 3I illustrate(s) operations of methods 300, 301, 302, 303, 304, 305, 306, 307, and/or 308 of voice or speech recognition executed by a processor of a computing device in accordance with various embodiments. With reference to FIGS. 1-3A, 3B, 3C, 3D, 3E, 3F, 3G, 3H, and/or 3I, the operations of the methods 300, 301, 302, 303, 304, 305, 306, 307, and/or 308 may be accomplished with one or more additional operations not described, and/or without one or more of the operations discussed. Additionally, the order in which the operations of the methods 300, 301, 302, 303, 304, 305, 306, 307, and/or 308 are illustrated in FIGS. 3A, 3B, 3C, 3D, 3E, 3F, 3G, 3H, and/or 3I and described below is not intended to be limiting.

In some embodiments, the methods 3A, 3B, 3C, 3D, 3E, 3F, 3G, 3H, and/or 3I may be implemented in one or more processors (e.g., a digital processor, an analog processor, a digital circuit designed to process information, an analog circuit designed to process information, a state machine, and/or other mechanisms for electronically processing information) in response to instructions stored electronically on an electronic storage medium of a computing device. The one or more processors may include one or more devices configured through hardware, firmware, and/or software to be specifically designed for execution of one or more of the operations of the methods 300, 301, 302, 303, 304, 305, 306, 307, and/or 308. For example, with reference to FIGS. 1-3A, 3B, 3C, 3D, 3E, 3F, 3G, 3H, and/or 3I, the operations of the methods 300, 301, 302, 303, 304, 305, 306, 307, and/or 308 may be performed by a processor (e.g., 210, 212, 214, 216, 218, 252, 260) of a computing device (e.g., 110, 190).

FIG. 3A illustrates the method 300, in accordance with one or more implementations.

In block 310, the processor of a computing device may perform operations including determining a voice or speech recognition threshold for voice or speech recognition based on information obtained from contextual information detected in an environment from which a received audio input was captured by the computing device and an emotional classification of a user's voice in the received audio input. In block 310, the processor of the user equipment may use the noise extraction module (e.g., 140), the audio context detection module (e.g., 150), the user emotion detection module (e.g., 160), the recognition level module (e.g., 170), and/or the voice and speech recognition threshold determination module (e.g., 180) to determine a voice or speech recognition threshold. For example, the processor may determine that a currently received utterance was spoken at a user's home in a calm and even manner. In this case, a voice or speech recognition model trained to consider the ambient noise in the user's home may more accurately translate speech and/or identify/authenticate a user from the sound of their voice. As another example, the processor may determine that a currently received utterance was shouted (i.e., loud) and spoken in a crowded place (e.g., a restaurant). In this case, a voice or speech recognition model using a higher recognition level may be used for accurately translating speech and/or identify/authenticate a user. In some embodiments, means for performing the operations of block 310 may include a processor (e.g., 210, 212, 214, 216, 218, 252, 260) coupled to a microphone (e.g., 112), and electronic storage (e.g., 220, 258).

In block 312, the processor of a computing device may perform operations including determining a confidence score for one or more key words identified in the received audio input. In block 312, the processor of the user equipment may determine the confidence score using a keyword detection module 130. In some embodiments, means for performing the operations of block 312 may include a processor (e.g., 210, 212, 214, 216, 218, 252, 260) coupled to electronic storage (e.g., 220, 258).

In block 314, the processor of a computing device may perform operations including outputting results of a voice or speech recognition analysis of the received audio input in response to the determined confidence score (i.e., determined in block 312) exceeding the determined voice or speech recognition threshold. In block 314, the processor of the user equipment may output the results of the voice or speech recognition analysis using a display, a speaker, and/or a transceiver of the user equipment. In some embodiments, means for performing the operations of block 314 may include a processor (e.g., 210, 212, 214, 216, 218, 252, 260) coupled to electronic storage (e.g., 220, 258).

In some embodiments, the processor may repeat any or all of the operations in blocks 310, 312, and 314 to repeatedly or continuously to perform voice and/or speech recognition.

FIG. 3B illustrates method 301 that may be perform with or as an enhancement to the method 300.

In block 316, the processor of a computing device may perform operations including analyzing the received audio input to obtain the contextual information detected in the environment from which the received audio input was recorded by the computing device. In block 316, the processor of the user equipment may use the audio context detection module (e.g., 150) to determine contextual information. For example, the processor may access GPS systems, providing coordinates, an address, or other location information. In addition, the processor may access one or more online databases that may identify a location that corresponds to the GPS information. Further, using contact information stored in the user equipment, the location may be more accurately associated with the user's home, office, or other frequented location. The processor may match background noise to samples, which may indicate the computing device is in a noisy place, a quiet place, or a location with other characteristic. In some embodiments, means for performing the operations of block 316 may include a processor (e.g., 210, 212, 214, 216, 218, 252, 260) coupled to a wireless transceiver (e.g., 208), electronic storage (e.g., 220, 258), and the microphone (e.g., 112). Following the operations in block 316, the processor may determine a voice or speech recognition threshold in block 310.

In some embodiments, the processor may repeat any or all of the operations in blocks 310, 312, 314, and 316 to repeatedly or continuously to perform voice and/or speech recognition.

FIG. 3C illustrates method 302 that may be perform with or as an enhancement to the method 300.

In block 318, the processor of a computing device may perform operations including analyzing the received audio input to determine the emotional classification of the user's voice in the received audio input. In block 318, the processor of the user equipment may use the user emotion detection module (e.g., 160) to determine an emotion type (e.g., 161) of the user's speech. For example, the processor may detect that the user's speech is slowed and hesitant, which implies the user is tired. Alternatively, the processor may detect that the user's speech is angry and louder than normal. The processor may match patterns of speech in the received audio input to samples of the user's previous speech, which may indicate an emotional state of the user as perceived from the received speech. In some embodiments, means for performing the operations of block 316 may include a processor (e.g., 210, 212, 214, 216, 218, 252, 260) coupled to a wireless transceiver (e.g., 208), electronic storage (e.g., 220, 258), and the microphone (e.g., 112). Following the operations in block 318, the processor may determine a voice or speech recognition threshold in block 310.

In some embodiments, the processor may repeat any or all of the operations in blocks 310, 312, 314, and 318 to repeatedly or continuously to perform voice and/or speech recognition.

FIG. 3D illustrates method 303 that may be perform with or as an enhancement to the methods 300 and 302.

In block 320, the processor of a computing device may perform operations including receiving an emotion classification model from a remote computing device. The received emotion classification model may be used to analyze the received audio input to determine the emotional classification of the user's voice in the received audio input, in block 318. Also, the emotion classification model may be received from the remote computing device(s) (e.g., 190). In block 320, the processor of the user equipment may use a transceiver (e.g., 208) to receive the emotion classification model. In some embodiments, means for performing the operations of block 320 may include a processor (e.g., 210, 212, 214, 216, 218, 252, 260) coupled to a wireless transceiver (e.g., 208), and electronic storage (e.g., 220, 258). Following the operations in block 320, the processor may determine the emotional classification of the user's voice in the received audio input, in block 318.

In some embodiments, the processor may repeat any or all of the operations in blocks 310, 312, 314, 318, and 320 to repeatedly or continuously to perform voice and/or speech recognition.

FIG. 3E illustrates method 304 that may be perform with or as an enhancement to the method 300.

In block 322, the processor of a computing device may perform operations including determining a recognition level of the received audio input based on at least one of a detection rate (DR) or a false alarm rate (FAR) of voice or speech recognition of words or phrases in the received audio input. Thus, determining the voice or speech recognition threshold in block 310 may include determining the voice or speech recognition threshold based on the determined recognition level of the received audio input. In block 322, the processor of the user equipment may use the recognition level module (e.g., 170) to determine the recognition level (e.g., 171) that should be used in analyzing of the user's speech. In some embodiments, means for performing the operations of block 322 may include a processor (e.g., 210, 212, 214, 216, 218, 252, 260) coupled to an electronic storage (e.g., 220, 258). Following the operations in block 322, the processor may determine a voice or speech recognition threshold in block 310.

In some embodiments, the processor may repeat any or all of the operations in blocks 310, 312, 314, and 322 to repeatedly or continuously to perform voice and/or speech recognition.

FIG. 3F illustrates method 305 that may be perform with or as an enhancement to the method 300.

In block 324, the processor of a computing device may perform operations including extracting background noise from the received audio input. Thus, determining the voice or speech recognition threshold for voice or speech recognition in block 310 may include determining the voice or speech recognition threshold based on the extracted background noise. In block 324, the processor of the user equipment may use the noise extraction module (e.g., 140) to determine characteristics of the background noise and generate a PCM background noise file (e.g., 137) that may be used in determining an appropriate voice and speech recognition threshold. In some embodiments, means for performing the operations of block 324 may include a processor (e.g., 210, 212, 214, 216, 218, 252, 260) coupled to an electronic storage (e.g., 220, 258). Following the operations in block 324, the processor may determine a voice or speech recognition threshold in block 310.

In some embodiments, the processor may repeat any or all of the operations in blocks 310, 312, 314, and 324 to repeatedly or continuously to perform voice and/or speech recognition.

FIG. 3G illustrates method 306 that may be perform with or as an enhancement to the method 300.

Following the operations in block 312 of the method 300, the processor may determine, in determination block 326, whether the confidence score determined in block 312 exceeds the voice or speech recognition threshold determined in block 310. The determination in determination block 326 may be performed by the keyword detection module 130. In some embodiments, means for performing the operations of determination block 326 may include a processor (e.g., 210, 212, 214, 216, 218, 252, 260) coupled to an electronic storage (e.g., 220, 258).

In response to the processor determining that the confidence score determined in block 312 exceeds the voice or speech recognition threshold (i.e., determination block 326 = "Yes"), the processor may outputting results of a voice or speech recognition analysis of the received audio input in block 314 of the method 300 as described.

In response to the processor determining that the confidence score determined in block 312 does not exceed the voice or speech recognition threshold (i.e., determination block 326 = "No"), the processor may receive a next audio input in 328 and then determine a voice or speech recognition threshold in block 310 of the method 300 as described.

In some embodiments, the processor may repeat any or all of the operations in blocks 310, 312, 314, and 328, as well as determination block 326 to repeatedly or continuously to perform voice and/or speech recognition.

FIG. 3H illustrates method 307 that may be perform with or as an enhancement to the method 304.

Following the operations in block 312 of the method 300, in block 330 the processor may send feedback to a remote computing device regarding whether the determined confidence score exceeded the determined voice or speech recognition threshold in block 310. The feedback that may be sent to the remote computing device(s) (e.g., 190) in block 330 may be sent in a format suitable for use by the remote computing device(s) to generate a threshold model update that may be sent to the computing device and received in block 332 of the method 308 described with reference to FIG. 3I. In some embodiments, means for performing the operations of block 330 may include a processor (e.g., 210, 212, 214, 216, 218, 252, 260) coupled to a wireless transceiver (e.g., 208), and electronic storage (e.g., 220, 258).

In some embodiments, the processor may repeat any or all of the operations in blocks 310, 312, 314, and 330 to repeatedly or continuously to perform voice and/or speech recognition.

FIG. 3I illustrates method 308 that may be perform with or as an enhancement to the methods 300.

In block 332, the processor of a computing device may perform operations including receiving a threshold model update from a remote computing device. In accordance with various embodiments, determining the voice or speech recognition threshold for voice or speech recognition may use the received threshold model update. In block 332, the processor of the user equipment may use a transceiver (e.g., 208) to receive the emotion threshold model update. In some embodiments, means for performing the operations of block 332 may include a processor (e.g., 210, 212, 214, 216, 218, 252, 260) coupled to a wireless transceiver (e.g., 208), and electronic storage (e.g., 220, 258).

Following the operations in block 332, the processor may determine the voice or speech recognition threshold for voice or speech recognition using the received threshold model update in block 310a.

In some embodiments, the processor may repeat any or all of the operations in blocks 310, 310a, 312, 314, 318, and 332 to repeatedly or continuously to perform voice and/or speech recognition.

Various embodiments (including, but not limited to, embodiments discussed above with reference to FIGS. 1-3I) may be implemented on a variety of remote computing devices, an example of which is illustrated in FIG. 4 in the form of a server. With reference to FIGS. 1-4, the remote computing device 190 may include a processor 408 coupled to volatile memory 402 and a large capacity nonvolatile memory, such as a disk drive 403. The network computing device 190 may also include a peripheral memory access device such as a floppy disc drive, compact disc (CD) or digital video disc (DVD) drive 406 coupled to the processor 408. The remote computing device 190 may also include network access ports 404 (or interfaces) coupled to the processor 408 for establishing data connections with a network, such as the Internet and/or a local area network coupled to other system computers and servers. The remote computing device 190 may include one or more antennas 407 for sending and receiving electromagnetic radiation that may be connected to a wireless communication link. The remote computing device 190 may include additional access ports, such as USB, Firewire, Thunderbolt, and the like for coupling to peripherals, external memory, or other devices.

The various aspects (including, but not limited to, embodiments discussed above with reference to FIGS. 1-3I) may be implemented on a variety of user equipment, an example of which is illustrated in FIG. 5 in the form of a mobile computing device. With reference to FIGS. 1-5, the user equipment 110 may include a first SoC 202 (e.g., a SoC-CPU) coupled to a second SoC 204 (e.g., a 5G capable SoC) and a third SoC 506 (e.g., a C-V2X SoC configured for managing V2V, V2I, and V2P communications over D2D links, such as D2D links establish in the dedicated Intelligent Transportation System (ITS) 5.9 GHz spectrum communications). The first, second, and/or third SoCs 202, 204, and 506 may be coupled to internal memory 516, a display 530, a speaker 514, a microphone 112, and a wireless transceiver 208. Additionally, the user equipment 110 may include one or more antenna 504 for sending and receiving electromagnetic radiation that may be connected to the wireless transceiver 208 (e.g., a wireless data link and/or cellular transceiver, etc.) coupled to one or more processors in the first, second, and/or third SoCs 202, 204, and 506. User equipment 110 may also include menu selection buttons or switches for receiving user inputs.

User equipment 110 may additionally include a sound encoding/decoding (CODEC) circuit 510, which digitizes sound received from the microphone 112 into data packets suitable for wireless transmission and decodes received sound data packets to generate analog signals that are provided to the speaker to generate sound and analyze ambient noise or speech. Also, one or more of the processors in the first, second, and/or third SoCs 202, 204, and 506, wireless transceiver 208 and CODEC circuit 510 may include a digital signal processor (DSP) circuit (not shown separately).

The processors implementing various embodiments may be any programmable microprocessor, microcomputer or multiple processor chip or chips that can be configured by software instructions (applications) to perform a variety of functions, including the functions of the various aspects described in this application. In some communication devices, multiple processors may be provided, such as one processor dedicated to wireless communication functions and one processor dedicated to running other applications. Typically, software applications may be stored in the internal memory before they are accessed and loaded into the processor. The processor may include internal memory sufficient to store the application software instructions.

Implementation examples are described in the following paragraphs. While some of the following implementation examples are described in terms of example methods, further example implementations may include: the example methods discussed in the following paragraphs implemented by a mobile computing device including a processor configured to perform operations of the example methods; the example methods discussed in the following paragraphs implemented by a mobile computing device including a modem processor configured to perform operations of the example methods; the example methods discussed in the following paragraphs implemented by a mobile computing device including means for performing functions of the example methods; the example methods discussed in the following paragraphs implemented in a processor use in a mobile computing device that is configured to perform the operations of the example methods; and the example methods discussed in the following paragraphs implemented as a non-transitory processor-readable storage medium having stored thereon processor-executable instructions configured to cause a processor or modem processor of a wireless device to perform the operations of the example methods.

A number of different cellular and mobile communication services and standards are available or contemplated in the future, all of which may implement and benefit from the various aspects. Such services and standards may include, e.g., third generation partnership project (3GPP), long term evolution (LTE) systems, third generation wireless mobile communication technology (3 G), fourth generation wireless mobile communication technology (4G), fifth generation wireless mobile communication technology (5G), global system for mobile communications (GSM), universal mobile telecommunications system (UMTS), 3GSM, general packet radio service (GPRS), code division multiple access (CDMA) systems (e.g., cdmaOne, CDMA1020TM), EDGE, advanced mobile phone system (AMPS), digital AMPS (IS-136/TDMA), evolution-data optimized (EV-DO), digital enhanced cordless telecommunications (DECT), Worldwide Interoperability for Microwave Access (WiMAX), wireless local area network (WLAN), Wi-Fi Protected Access I & II (WPA, WPA2), integrated digital enhanced network (iDEN), C-V2X, V2V, V2P, V2I, and V2N, etc. Each of these technologies involves, for example, the transmission and reception of voice, data, signaling, and/or content messages. It should be understood that any references to terminology and/or technical details related to an individual telecommunication standard or technology are for illustrative purposes only, and are not intended to limit the scope of the claims to a particular communication system or technology unless specifically recited in the claim language.

The foregoing method descriptions and the process flow diagrams are provided merely as illustrative examples and are not intended to require or imply that the operations of various aspects must be performed in the order presented. As will be appreciated by one of skill in the art the order of operations in the foregoing aspects may be performed in any order. Words such as "thereafter," "then," "next," etc. are not intended to limit the order of the operations; these words are used to guide the reader through the description of the methods. Further, any reference to claim elements in the singular, for example, using the articles "a," "an," or "the" is not to be construed as limiting the element to the singular.

Various illustrative logical blocks, modules, components, circuits, and algorithm operations described in connection with the aspects disclosed herein may be implemented as electronic hardware, computer software, or combinations of both. To clearly illustrate this interchangeability of hardware and software, various illustrative components, blocks, modules, circuits, and operations have been described above generally in terms of their functionality. Whether such functionality is implemented as hardware or software depends upon the particular application and design constraints imposed on the overall system. Skilled artisans may implement the described functionality in varying ways for each particular application, but such aspect decisions should not be interpreted as causing a departure from the scope of the claims.

The hardware used to implement various illustrative logics, logical blocks, modules, and circuits described in connection with the aspects disclosed herein may be implemented or performed with a general purpose processor, a digital signal processor (DSP), an ASIC, a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of receiver smart objects, e.g., a combination of a DSP and a microprocessor, a plurality of microprocessors, one or more microprocessors in conjunction with a DSP core, or any other such configuration. Alternatively, some operations or methods may be performed by circuitry that is specific to a given function.

In one or more aspects, the functions described may be implemented in hardware, software, firmware, or any combination thereof. If implemented in software, the functions may be stored as one or more instructions or code on a non-transitory computer-readable storage medium or non-transitory processor-readable storage medium. The operations of a method or algorithm disclosed herein may be embodied in a processor-executable software module or processor-executable instructions, which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable storage media may include RAM, ROM, EEPROM, FLASH memory, CD-ROM or other optical disk storage, magnetic disk storage or other magnetic storage smart objects, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable storage medium and/or computer-readable storage medium, which may be incorporated into a computer program product.

## Claims

1. A method (300, 301, 302, 303, 304, 305, 306, 307, 308) of voice or speech recognition executed by a processor of a computing device, comprising:
determining (310) a voice or speech recognition threshold for voice or speech recognition based on information obtained from contextual information detected in an environment from which a received audio input was captured by the computing device and an emotional classification of a user's voice in the received audio input;
determining (312) a confidence score for one or more key words identified in the received audio input; and
outputting (314) results of a voice or speech recognition analysis of the received audio input in response to the determined confidence score exceeding the determined voice or speech recognition threshold; and the method further comprising:
receiving (332) a threshold model update from a remote computing device,
wherein determining (310a) the voice or speech recognition threshold for voice or speech recognition uses the received threshold model update; and
sending (330) feedback to the remote computing device regarding audio input received by the computing device in a format suitable for use by the remote computing device in generating the received threshold model update.

2. The method of claim 1, further comprising:
analyzing (316) the received audio input to obtain the contextual information detected in the environment from which the received audio input was recorded by the computing device.

3. The method of claim 1, further comprising:
analyzing (318) the received audio input to determine the emotional classification of the user's voice in the received audio input; and
further comprising:
receiving (320) an emotion classification model from a remote computing device,
wherein analyzing the received audio input to determine the emotional classification of the user's voice in the received audio input comprises analyzing the received audio input using the received emotional classification model.

4. The method of claim 1, further comprising:
determining a recognition level of the received audio input based on at least one of a detection rate or a false alarm rate of voice or speech recognition of words or phrases in the received audio input,
wherein determining the voice or speech recognition threshold comprises determining the voice or speech recognition threshold based on the determined recognition level of the received audio input.

5. A computing device (110), comprising:
a microphone (112); and
a processor coupled to the microphone, wherein the processor is configured with processor-executable instructions to:
determine a voice or speech recognition threshold for voice or speech recognition based on information obtained from contextual information detected in an environment from which a received audio input was captured by the computing device and an emotional classification of a user's voice in the received audio input;
determine a confidence score for one or more key words identified in the received audio input; and
output results of a voice or speech recognition analysis of the received audio input in response to the determined confidence score exceeding the determined voice or speech recognition threshold; and
the computing device further comprising:
a transceiver coupled to the processor,
wherein the processor is further configured with processor-executable instructions to:
receive, via the transceiver, a threshold model update from a remote computing device; and
determine the voice or speech recognition threshold for voice or
speech recognition using the received threshold model update, and
wherein the processor is further configured with processor-executable instructions to:
send, via the transceiver, feedback to the remote computing device regarding audio input received by the computing device in a format suitable for use by the remote computing device in generating the received threshold model update.

6. The computing device of claim 5, wherein the processor is further configured with processor-executable instructions to:
analyze the received audio input to obtain the contextual information detected in the environment from which the received audio input was recorded by the computing device.

7. The computing device of claim 5, wherein the processor is further configured with processor-executable instructions to:
analyze the received audio input to determine the emotional classification of the user's voice in the received audio input.

8. The computing device of claim 7, further comprising:
a transceiver coupled to the processor,
wherein the processor is further configured with processor-executable instructions to:
receive, via the transceiver, an emotion classification model from a remote computing device (190); and
analyze the received audio input to determine the emotional classification of the user's voice in the received audio input using the received emotional classification model.

9. The computing device of claim 5, wherein the processor is further configured with processor-executable instructions to:
determine a recognition level of the received audio input based on at least one of a detection rate or a false alarm rate of voice or speech recognition of words or phrases in the received audio input; and
determine the voice or speech recognition threshold based on the determined recognition level of the received audio input.

10. The computing device of claim 5, wherein the processor is further configured with processor-executable instructions to:
extract background noise from the received audio input; and
determine the voice or speech recognition threshold for voice or speech recognition based on extracted background noise.

11. The computing device of claim 5, further comprising:
a transceiver coupled to the processor,
wherein the processor is further configured with processor-executable instructions to send, via the transceiver, feedback to a remote computing device regarding whether the determined confidence score exceeded the determined voice or speech recognition threshold.

12. A non-transitory processor-readable medium having stored thereon processor-executable instructions configured to cause a processor of a computing device to perform the method of any of claims 1-4.

## Patentansprüche

1. Ein Verfahren (300, 301, 302, 303, 304, 305, 306, 307, 308) zur Stimm- oder Spracherkennung, dass durch einen Prozessor einer Recheneinrichtung ausgeführt wird, das Folgendes aufweist:
Bestimmen (310) eines Stimm- oder Spracherkennungsschwellenwertes für Stimm- oder Spracherkennung basierend auf Information, die aus Kontextinformation erlangt wird, die in einer Umgebung detektiert wird, aus welcher eine empfangene Audioeingabe durch die Recheneinrichtung erfasst wurde und auf einer emotionalen Klassifikation einer Stimme eines Nutzers in der empfangenen Audioeingabe;
Bestimmen (312) eines Konfidenz- bzw. Vertrauenswertes für ein oder mehrere Schlüsselwörter, die in der empfangenen Audioeingabe identifiziert wurden; und
Ausgeben (314) von Ergebnissen einer Stimm- oder Spracherkennungsanalyse der empfangenen Audioeingabe ansprechend darauf, dass der bestimmte Konfidenzwert den bestimmten Stimm- oder Spracherkennungsschwellenwert überschreitet; und wobei das Verfahren weiter Folgendes aufweist:
Empfangen (332) einer Schwellenwertmodellaktualisierung von einer entfernt vorliegenden Recheneinrichtung,
wobei Bestimmen (310a) des Stimm- oder Spracherkennungsschwellenwertes zur Stimm- oder Spracherkennung die empfangene Schwellenwertmodellaktualisierung nutzt; und
Senden (330) von Feedback an die entfernt vorliegenden Recheneinrichtung bezüglich einer Audioeingabe, die durch die Recheneinrichtung empfangen wurde, in einem Format, das zur Nutzung durch die entfernt vorliegende Recheneinrichtung beim Generieren der empfangenen Schwellenwertmodellaktualisierung geeignet ist.

2. Verfahren nach Anspruch 1, das weiter Folgendes aufweist:
Analysieren (316) der empfangenen Audioeingabe zum Erlangen der Kontextinformation, die in der Umgebung detektiert wird, aus welcher die empfangene Audioeingabe durch die Recheneinrichtung aufgezeichnet wurde.

3. Verfahren nach Anspruch 1, das weiter Folgendes aufweist:
Analysieren (318) der empfangenen Audioeingabe, um die emotionale Klassifikation der Stimme des Nutzers in der empfangenen Audioeingabe zu bestimmen; und
das weiter Folgendes aufweist:
Empfangen (320) eines Emotionsklassifikationsmodells von einer entfernt vorliegenden Recheneinrichtung,
wobei Analysieren der empfangenen Audioeingabe zum Bestimmen der emotionalen Klassifikation der Stimme des Nutzers in der empfangenen Audioeingabe Analysieren der empfangenen Audioeingabe unter Nutzung des empfangenen Modells emotionaler Klassifikation aufweist.

4. Verfahren nach Anspruch 1, das weiter Folgendes aufweist:
Bestimmen eines Erkennungsniveaus der empfangenen Audioeingabe basierend auf wenigstens einem von einer Detektionsrate oder einer Fehlalarmrate von Stimm- oder Spracherkennung von Wörtern oder Phrasen in der empfangenen Audioeingabe,
wobei Bestimmen des Stimm- oder Spracherkennungsschwellenwertes Bestimmen des Stimm- oder Spracherkennungsschwellenwertes basierend auf dem bestimmten Erkennungsniveau der empfangenen Audioeingabe aufweist.

5. Eine Recheneinrichtung (110), die Folgendes aufweist:
ein Mikrofon (112); und
einen Prozessor, der an das Mikrofon gekoppelt ist, wobei der Prozessor mit von einem Prozessor ausführbaren Instruktionen konfiguriert ist zum:
Bestimmen eines Stimm- oder Spracherkennungsschwellenwertes für Stimm- oder Spracherkennung basierend auf Information, die aus Kontextinformation erlangt wird, die in einer Umgebung detektiert wird, aus welcher eine empfangene Audioeingabe durch die Recheneinrichtung erfasst wurde und auf einer emotionalen Klassifikation einer Stimme eines Nutzers in der empfangenen Audioeingabe;
Bestimmen eines Konfidenz- bzw. Vertrauenswertes für ein oder mehrere Schlüsselwörter, die in der empfangenen Audioeingabe identifiziert wurden; und
Ausgeben von Ergebnissen einer Stimm- oder Spracherkennungsanalyse der empfangenen Audioeingabe ansprechend darauf, dass der bestimmte Konfidenzwert den bestimmten Stimm- oder Spracherkennungsschwellenwert überschreitet; und
wobei die Recheneinrichtung weiter Folgendes aufweist:
einen Transceiver, der an den Prozessor gekoppelt ist,
wobei der Prozessor weiter mit von einem Prozessor ausführbaren Instruktionen konfiguriert ist zum:
Empfangen, über den Transceiver, einer Schwellenwertmodellaktualisierung von einer entfernt vorliegenden Recheneinrichtung; und
Bestimmen des Stimm- oder Spracherkennungsschwellenwertes zur Stimm- oder Spracherkennung unter Nutzung der empfangenen Schwellenwertmodellaktualisierung, und
wobei der Prozessor weiter mit von einem Prozessor ausführbaren Instruktionen konfiguriert ist zum:
Senden, über den Transceiver, von Feedback an die entfernt vorliegende Recheneinrichtung bezüglich einer Audioeingabe, die durch die Recheneinrichtung empfangen wurde, in einem Format, das zur Nutzung durch die entfernt vorliegende Recheneinrichtung beim Generieren der empfangenen Schwellenwertmodellaktualisierung geeignet ist.

6. Recheneinrichtung nach Anspruch 5, wobei der Prozessor weiter konfiguriert ist mit von einem Prozessor ausführbaren Instruktionen zum:
Analysieren der empfangenen Audioeingabe, um die Kontextinformation zu erlangen, die in der Umgebung detektiert wurde, aus welcher die empfangene Audioeingabe durch die Recheneinrichtung aufgezeichnet wurde.

7. Recheneinrichtung nach Anspruch 5, wobei der Prozessor weiter konfiguriert ist mit von einem Prozessor ausführbaren Instruktionen zum:
Analysieren der empfangenen Audioeingabe, um die emotionale Klassifikation der Stimme des Nutzers in der empfangenen Audioeingabe zu bestimmen.

8. Recheneinrichtung nach Anspruch 7, die weiter Folgendes aufweist:
einen Transceiver, der an den Prozessor gekoppelt ist,
wobei der Prozessor weiter mit von einem Prozessor ausführbaren Instruktionen konfiguriert ist zum:
Empfangen, über den Transceiver, eines Emotionsklassifikationsmodells von einer entfernt vorliegenden Recheneinrichtung (190); und
Analysieren der empfangenen Audioeingabe, um die emotionale Klassifikation der Stimme des Nutzers in der empfangenen Audioeingabe unter Nutzung des empfangenen Modells zur emotionalen Klassifikation zu bestimmen.

9. Recheneinrichtung nach Anspruch 5, wobei der Prozessor weiter konfiguriert ist mit von einem Prozessor ausführbaren Instruktionen zum:
Bestimmen eines Erkennungsniveaus der empfangenen Audioeingabe basierend auf wenigstens einem von einer Detektionsrate oder einer Fehlalarmrate von Stimm- oder Spracherkennung von Wörtern oder Phrasen in der empfangenen Audioeingabe, und
Bestimmen des Stimm- oder Spracherkennungsschwellenwertes basierend auf dem bestimmten Erkennungsniveau der empfangenen Audioeingabe.

10. Recheneinrichtung nach Anspruch 5, wobei der Prozessor weiter mit von einem Prozessor ausführbaren Instruktionen konfiguriert ist zum:
Extrahieren von Hintergrundrauschen aus der empfangenen Audioeingabe; und
Bestimmen des Stimm- oder Spracherkennungsschwellenwertes für Stimm- oder Spracherkennung basierend auf extrahiertem Hintergrundrauschen.

11. Recheneinrichtung nach Anspruch 5, die weiter Folgendes aufweist:
einen Transceiver, der an den Prozessor gekoppelt ist,
wobei der Prozessor weiter mit von einem Prozessor ausführbaren Instruktionen konfiguriert ist zum Senden, über den Transceiver, von Feedback an eine entfernt vorliegende Recheneinrichtung bezüglich dessen, ob der bestimmte Konfidenzwert den bestimmten Stimm- oder Spracherkennungsschwellenwert überschreitet.

12. Ein nicht transitorisches prozessorlesbares Medium mit darauf gespeicherten von einem Prozessor ausführbaren Instruktionen, die konfiguriert sind einen Prozessor einer Recheneinrichtung zu veranlassen, das Verfahren nach einem der Ansprüche 1-4 durchzuführen.

## Revendications

1. Procédé (300, 301, 302, 303, 304, 305, 306, 307, 308) de reconnaissance vocale ou de parole exécuté par le processeur d'un dispositif informatique, comprenant :
la détermination (310) d'un seuil de reconnaissance vocale ou de parole sur la base d'informations obtenues à partir d'informations contextuelles détectées dans un environnement à partir duquel une entrée audio reçue a été capturée par le dispositif informatique et d'une classification des émotions de la voix d'un utilisateur dans l'entrée audio reçue ;
la détermination (312) d'un score de confiance pour un ou plusieurs mots clefs identifiés dans l'entrée audio reçue ; et
la fourniture en sortie (314) de résultats d'une analyse de reconnaissance vocale ou de parole de l'entrée audio reçue en réponse au fait que le score de confiance déterminé dépasse le seuil de reconnaissance vocale ou de parole déterminé ; et le procédé comprenant en outre :
la réception (332) d'une mise à jour d'un modèle seuil à partir d'un dispositif informatique distant,
dans lequel la détermination (310a) du seuil de reconnaissance vocale ou de parole pour reconnaître la voix ou la parole utilise la mise à jour du modèle seuil reçue ; et
l'envoi (330) d'une réaction au dispositif informatique distant concernant une entrée audio reçue par le dispositif informatique dans un format adapté à être utilisé par le dispositif informatique distant en générant la mise à jour du modèle seuil reçue.

2. Procédé selon la revendication 1, comprenant en outre :
l'analyse (316) de l'entrée audio reçue pour obtenir les informations contextuelles détectées dans l'environnement à partir duquel l'entrée audio reçue a été enregistrée par le dispositif informatique.

3. Procédé selon la revendication 1, comprenant en outre :
l'analyse (318) du signal audio reçu pour déterminer la classification des émotions de la voix de l'utilisateur dans le signal d'entrée reçu ; et
comprenant en outre :
la réception (320) d'un modèle de classification des émotions à partir d'un dispositif informatique distant,
dans lequel l'analyse de l'entrée audio reçue pour déterminer la classification des émotions de la voix de l'utilisateur dans l'entrée audio reçue comprend l'analyse de l'entrée audio reçue en utilisant le modèle de classification des émotions reçu.

4. Procédé selon la revendication 1, comprenant en outre :
la détermination d'un niveau de reconnaissance de l'entrée audio reçue sur la base d'au moins un parmi un taux de détection ou un taux de fausse alarme de la reconnaissance vocale ou de la parole de mots ou de phrases dans l'entrée audio reçue,
dans lequel la détermination du seuil de reconnaissance vocale ou de parole comprend la détermination du seuil de reconnaissance vocale ou de parole sur la base du niveau de reconnaissance déterminé de l'entrée audio reçue.

5. Dispositif informatique (110), comprenant :
un microphone (112) ; et
un processeur relié au microphone, dans lequel le processeur est configuré avec des instructions exécutables par le processeur pour :
déterminer un seuil de reconnaissance vocale ou de parole sur la base d'informations obtenues à partir d'informations contextuelles détectées dans un environnement à partir duquel une entrée audio reçue a été capturée par le dispositif informatique et d'une classification des émotions de la voix d'un utilisateur dans l'entrée audio reçue ;
déterminer un score de confiance pour un ou plusieurs mots clefs identifiés dans l'entrée audio reçue ; et
fournir en sortie des résultats d'une analyse de reconnaissance vocale ou de parole de l'entrée audio reçue en réponse au fait que le score de confiance déterminé dépasse le seuil de reconnaissance vocale ou de parole déterminé ; et
le dispositif informatique comprenant en outre :
un émetteur-récepteur relié au processeur,
dans lequel le processeur est configuré en outre avec des instructions exécutables par le processeur pour :
recevoir, par l'intermédiaire de l'émetteur-récepteur, une mise à jour d'un modèle seuil en provenance d'un dispositif informatique distant ; et
déterminer le seuil de reconnaissance vocale ou de parole pour reconnaître la voix ou la parole en utilisant la mise à jour du modèle seuil reçue, et
dans lequel le processeur est configuré en outre avec des instructions exécutables par le processeur pour :
envoyer, par l'intermédiaire de l'émetteur-récepteur, une réaction au dispositif informatique distant concernant une entrée audio reçue par le dispositif informatique dans un format adapté à être utilisé par le dispositif informatique distant en générant la mise à jour du modèle seuil reçue.

6. Dispositif informatique selon la revendication 5, dans lequel le processeur est configuré en outre avec des instructions exécutables par le processeur pour :
analyser l'entrée audio reçue pour obtenir les informations contextuelles détectées dans l'environnement à partir duquel l'entrée audio reçue a été enregistrée par le dispositif informatique.

7. Dispositif informatique selon la revendication 5, dans lequel le processeur est configuré en outre avec des instructions exécutables par le processeur pour :
analyser l'entrée audio reçue pour déterminer la classification des émotions de la voix de l'utilisateur dans l'entrée audio reçue.

8. Dispositif informatique selon la revendication 7, comprenant en outre :
un émetteur-récepteur relié au processeur,
dans lequel le processeur est configuré en outre avec des instructions exécutables par le processeur pour :
recevoir, par l'intermédiaire de l'émetteur-récepteur, un modèle de classification des émotions provenant d'un dispositif informatique distant (190) ; et
analyser l'entrée audio reçue pour déterminer la classification des émotions de la voix de l'utilisateur dans l'entrée audio reçue en utilisant le modèle de classification des émotions reçu.

9. Dispositif informatique selon la revendication 5, dans lequel le processeur est configuré en outre avec des instructions exécutables par le processeur pour :
déterminer un niveau de reconnaissance de l'entrée audio reçue sur la base d'au moins un parmi un taux de détection ou un taux de fausse alarme de la reconnaissance vocale ou de la parole des mots ou des phrases contenus dans l'entrée audio reçue ; et
déterminer le seuil de reconnaissance vocale ou de parole sur la base du niveau de reconnaissance déterminé de l'entrée audio reçue.

10. Dispositif informatique selon la revendication 5, dans lequel le processeur est configuré en outre avec des instructions exécutables par le processeur pour :
extraire le bruit de fond du signal audio reçu ; et
déterminer le seuil de reconnaissance vocale ou de parole sur la base du bruit de fond extrait.

11. Dispositif informatique selon la revendication 5, comprenant en outre :
un émetteur-récepteur relié au processeur,
dans lequel le processeur est configuré en outre avec des instructions exécutables par le processeur pour envoyer, par l'intermédiaire de l'émetteur-récepteur, une réaction à un dispositif informatique distant concernant si le score de confiance déterminé a dépassé le seuil de reconnaissance vocale ou de parole déterminé.

12. Support non transitoire lisible par un processeur, sur lequel sont stockées des instructions exécutables par processeur, configurées pour amener un processeur d'un dispositif informatique à exécuter le procédé selon l'une quelconque des revendications 1 à 4.
